Europäisches Patentamt

(19) European Patent Office

Office européen des brevets

(11) Veröffentlichungsnummer : **0 126 363**
**B1**

(12) **EUROPÄISCHE PATENTSCHRIFT**

(45) Veröffentlichungstag der Patentschrift :
03.12.86

(51) Int. Cl.⁴ : **C 10 L 1/22**, E 21 B 43/25// C08F220/18

(21) Anmeldenummer : 84105097.4

(22) Anmeldetag : 05.05.84

(54) Verwendung von Copolymeren aus Estern und Amiden der Acryl- und/oder Methacrylsäure als Stockpunkterniedriger für Paraffinlösungen.

(30) Priorität : 13.05.83 DE 3317396

(43) Veröffentlichungstag der Anmeldung :
28.11.84 Patentblatt 84/48

(45) Bekanntmachung des Hinweises auf die Patenterteilung : 03.12.86 Patentblatt 86/49

(84) Benannte Vertragsstaaten :
DE FR GB IT NL

(56) Entgegenhaltungen :
GB-A- 1 511 503
US-A- 2 584 968
US-A- 2 892 821

(73) Patentinhaber : Henkel Kommanditgesellschaft auf Aktien
Postfach 1100 Henkelstrasse 67
D-4000 Düsseldorf-Holthausen (DE)

(72) Erfinder : Schlüter, Kaspar, Dr.
Spreestrasse 26
D-5650 Solingen 11 (DE)
Erfinder : Zöllner, Wolfgang
Bruhnstrasse 2a
D-4000 Düsseldorf 1 (DE)

**Beschreibung**

Die Erfindung betrifft neue Hilfsmittel für die Rohölförderung und -verarbeitung.

Im Zuge der Verknappung von Rohöl werden in steigendem Maße Öle gefördert und verarbeitet, die einen relativ hohen Anteil von Paraffinkohlenwasserstoffen, welche bei Raumtemperatur fest sind, aufweisen. Derartige Öle verlieren ihre Fließfähigkeit bei der Abkühlung von der meist erhöhten Lagerstättentemperatur auf Raumtemperatur durch Auskristallisieren höher schmelzender Bestandteile. Um Schwierigkeiten bei Förderung, Transport und Verarbeitung zu vermeiden, ist es daher üblich, Stockpunkterniedriger, auch Fließfähigkeitsverbesserer oder Kristallisationsinhibitoren genannt, zuzusetzen.

Es ist bereits eine Reihe derartiger Fließverbesserer bekannt. So wird in der deutschen Offenlegungsschrift 22 64 328 die Verwendung von polymeren Acrylestern mit 18-24 C-Atomen im Alkoholrest beschrieben. Nachteilig sind die relativ hohen Einsatzkonzentrationen von 0,01 bis 3 Gew.-%, bezogen auf Erdöl.

Für die gleiche Anwendung werden in der Deutschen Offenlegungsschrift 22 10 431 und der Deutschen Auslegeschrift 26 12 757 Copolymere aus langkettigen Acryl- oder Methacrylestern und 4-Vinylpyridin beschrieben. Die Einsatzkonzentrationen betragen zwischen 200 und 2 000 ppm. Nachteilig ist, daß diese Produkte vergleichsweise teuer sind, da 4-Vinylpyridin technisch nur schwer zugänglich ist.

In der Deutschen Offenlegungsschrift 29 26 474 werden Copolymere aus langkettigen Acrylsäurestern, und zwar den Estern von sogenannten Ziegler-Alkoholen und Dimethylaminoalkylacrylsäureestern oder -methacrylsäureestern für die Verwendung als Stockpunkterniedriger vorgeschlagen. Ausgelobt wird die Scherstabilität der Produkte sowie deren Wirksamkeit bei Konzentrationen von 50-350 ppm. Es ist jedoch bekannt, daß derartige Ester mit Dialkylaminogruppen in Gegenwart von Wasser der Hydrolyse unterliegen können, wobei dann amphotere, größtenteils unlösliche und damit unwirksame Polymere entstehen. Schließlich wird in der DOS-30 31 900 ein Copolymeres aus langkettigen Acrylaten und Maleinsäureanhydrid als Stockpunkterniedriger vorgeschlagen. Nachteilig ist hier, daß die Anhydridgruppen aufgrund ihrer hohen Reaktivität weiter reagieren können und dabei Säuren entstehen, welche möglicherweise die Korrosion fördern können.

Aus dem US-Patent 2 584 968 sind Copolymere von Methacrylanilid und Alkylestern der Acryl- oder Methacrylsäure bekannt, wobei die Ester sich von $C_8$-$C_{18}$-Alkoholen ableiten und der Anteil von Methacrylanilid zwischen 2 und 25 Gew.-% des Copolymeren beträgt. Die Copolymeren sind als sogenannte Viskositätsindexverbesserer geeignet, d. h. sie verhindern zumindest weitgehend den raschen Abfall der Viskosität eines Mineralöls beim Erwärmen. Dazu werden sie in Mengen von 1,5 % (15 000 ppm) eingesetzt. Als Fließpunkterniedriger sind derartige Copolymere jedoch nicht oder nur in unwirtschaftlich großen Mengen geeignet.

Die vorliegende Erfindung hat sich die Aufgabe gestellt, für die Verwendung als Stockpunkterniedriger für Lösungen von bei Raumtemperatur festen Paraffinen in Kohlenwasserstoffen Copolymere vorzuschlagen, die

— aus technisch gut zugänglichen und daher wohlfeilen Monomeren aufgebaut sind

— insbesondere aus Estern der Acryl- oder Methacrylsäure mit aus nachwachsenden Rohstoffen gewinnbaren Fettalkoholen bestehen und die

— bereits in kleinen Konzentrationen hohe Wirkung zeigen.

Dabei sollen die von anderen Systemen bekannten guten Eigenschaften, etwa die Stabilität bei Scherung, erhalten bleiben.

Gegenstand der Erfindung ist somit die Verwendung von Copolymeren aus

— Estern der Acryl- und/oder Methacrylsäure mit 16-24 C-Atomen einerseits sowie

— Acryl und/oder Methacrylamiden, die gewünschtenfalls am N-Atom eine lineare Alkylgruppe mit 1-18 C-Atomen, eine Benzylgruppe oder eine Dimethylamino- oder Diethylaminogruppe, die über einen $C_3$-$C_6$-Rest gebunden ist, aufweisen, andererseits
wobei das Molverhältnis zu Ester : Amid zwischen 2 : 1 und 10 : 1 liegt, als Stockpunkterniedriger für Lösungen fester Paraffine in Kohlenwasserstoffen.

Die erfindungsgemäß zu verwendenden Copolymeren sind aus Acryl- bzw. Methacrylestereinheiten und Acryl- bzw. Methacrylamideinheiten aufgebaut. Dabei beträgt das Molverhältnis Ester : Amid zwischen 2 : 1 und 10 : 1, bevorzugt ist ein Molverhältnis zwischen 3 : 1 und 6 : 1. Besonders geeignete Produkte weisen ein Molverhältnis um 4 : 1 auf. Es hat sich dabei gezeigt, daß bei Erhöhen des Amidanteils über die Grenze hinaus Produkte entstehen, die nur noch schwierig in Mineralölen zu lösen sind. Andererseits weisen Produkte mit einem kleineren Amidanteil als 10 : 1 nur noch in sehr hohen Anwendungskonzentrationen stockpunkterniedrigende Wirkung auf.

Die erfindungsgemäß zu verwendenden Copolymeren können aus unterschiedlichen langkettigen Estern der Acryl- und/oder Methacrylsäure hergestellt werden. Wichtig ist nur, daß diese Ester im Mittel mehr als 16 und bis zu 24 Kohlenstoffatome aufweisen. So können in einer ersten Ausführungsform der Erfindung Ester mit geradkettigen, geradzahligen Alkoholen eingesetzt werden. Es ist hierbei bevorzugt, nicht einzelne Ester sondern deren Gemische einzusetzen. Besonders bevorzugt ist es, Ester von Acrylsäure oder Methacrylsäure mit Fettalkoholgemischen zu verwenden. Fettalkohole sind Folgepro-

**0 126 363**

dukte natürlich vorkommender Fettsäuren und liegen stets im Gemisch vor. Bevorzugte Fettalkoholgemische sind gesättigte oder ungesättigte $C_{18}$-$C_{24}$-Schnitte, die durch Reduktion und gewünschtenfalls Hydrierung von erucasäurereichen Rübölfettsäureestern hergestellt werden. Weitere bevorzugte Fettalkohole sind die Hydrierungsprodukte von Erucaalkohol. Ein kommerziell erhältliches, besonders bevorzugtes Fettalkoholgemisch weist folgende Zusammensetzung auf : Stearylalkohol 5-15 Gew.-%, Arachinylalkohol 10-20 Gew.-%, Behenylalkohol größer als 70 Gew.-% und Lignocerinalkohol ca. 1 Gew.-%. Ein weiteres bevorzugtes Fettalkoholgemisch weist die folgende Zusammensetzung auf : Stearylalkohol 40-45 Gew.-%, Arachinylalkohol 8-20 Gew.-%, Behenylalkohol 40-45 Gew.-% und Lignocerylalkohol ca. 1 Gew.-%. Ein weiteres bevorzugtes Fettalkoholgemisch weist ungesättigte Bestandteile der Kettenlänge $C_{18}$ und $C_{22}$ auf, wobei die Jodzahl zwischen 60 und 95 liegt.

Die erfindungsgemäß zu verwendenden Copolymeren enthalten weiterhin Acryl- und/oder Methacrylsäureamide. Nach einer bevorzugten Ausführungsform werden hier unsubstituierte Amide verwendet, also Acrylamid und/oder Methacrylamid.

Nach einer weiteren Ausführungsform werden am Stickstoff monosubstituierte (Meth)acrylamide verwendet, die als Substituenten einen linearen Alkylrest mit 1-18 C-Atomen ohne weitere funktionelle Gruppe tragen. Bevorzugt sind Verbindungen mit linearen Alkylresten wie N-Methylacrylamid, N-Butylacrylamid sowie N-Decyl- und N-Octadecylacrylamid sowie die entsprechenden Derivate des Methacrylamids. Weiterhin kann N-Benzylacrylamid bzw. Methacrylamid eingesetzt werden.

Nach einer speziellen Ausführungsform der Erfindung werden N-Alkylacrylamide und/oder -methacrylamide verwendet, die einen basischen Substituenten aufweisen. Geeignet sind hier Acryl- und/oder Methacrylamide mit einer Dialkylaminoalkylgruppe am Stickstoff. Unter dieser geeigneten Verbindung sind besonders geeignet N-Dimethyl- und N,N-Diethylalkylacrylamide und -methacrylamide. Ein besonders bevorzugtes Produkt ist Dimethylaminopropylmethacrylamid.

Für die erfindungsgemäße Anwendung sind in erster Linie recht kurzkettige Copolymere geeignet.

Zwar ist es zumindest mit einfachen Mitteln nicht möglich, eine Aussage über das Molekulargewicht zu machen, doch bietet die spezifische Viskosität einen Anhaltspunkt. Die spezifische Viskosität ist das Verhältnis der Durchlaufszeiten eines reinen Lösungsmittels zu dem einer Polymerlösung durch eine Kapillare. Die erfindungsgemäß zu verwendenden Copolymeren sollen eine spezifische Viskosität zwischen 0,05 und 0,5 aufweisen, gemessen als 1 %ige Lösung in Toluol bei 20 °C. Geeignete Produkte werden erhalten, indem man die Monomeren in einem Lösungsmittel z. B. in Toluol bei 95-105 °C mit 0,5 bis 3 mol-% Azoisobutyronitril polymerisiert.

Bei der Herstellung der erfindungsgemäß zu verwendenden Copolymeren werden zunächst die langkettigen Acryl- oder Methacrylsäureester hergestellt. Dazu ist es bevorzugt, die Fettalkohole bei erhöhter Temperatur, etwa 60 °C, in Toluol oder einem anderen mit Wasser ein Azeotrop bildendes Schleppmittel zu lösen und die Säure zuzugeben. Es wird dann als Veresterungskatalysator 1 oder 2 Gew.-% Schwefelsäure und/oder Paratoluolsulfonsäure zugesetzt, und nach Zugabe eines Inhibitors für die radikalische Polymerisation, z. B. Hydrochinon, am Rückfluß erhitzt, bis die theoretische Wassermenge abgeschieden worden ist. Nach Abdestillieren von nicht umgesetzter Acryl- und/oder Methacrylsäure werden pastenförme Acryl- und/oder Methacrylsäureester mit Esterzahlen zwischen 130 und 160 erhalten. Die Ester werden danach in einem geeigneten Lösungsmittel, z. B. Butanon und/oder Toluol gelöst, mit den Amiden versetzt und nach Zugabe eines Radikalbildners, z. B. eines organischen Peroxids oder einer organischen Azoverbindung polymerisiert. Dabei ist es möglich, vor Polymerisationsbeginn die Monomeren zu mischen. Bevorzugt ist es jedoch, daß bei der radikalischen Copolymerisation schneller verbrauchte Comonomere während der Reaktionsdauer kontinuierlich oder in Portionen zuzufügen. Auf diese Weise werden Produkte erhalten, deren molekularer Aufbau eher einer idealen Statistik entspricht. Das bei der Copolymerisation schneller verbrauchte Monomere läßt sich in einfacher Weise ermitteln indem man bei unterschiedlichen Molverhältnissen bis zu geringen Umsätzen polymerisiert und in den so entstandenen Copolymeren durch Stickstoffbestimmung das Einbauverhältnis feststellt. Es gilt hier das einschlägige Fachwissen der Polymerchemie. Verwiesen sei auf Polymer Handbook 2. Ed. J. Brandrup und E. H. Immergut, J. Wiley & Sons, New York (1975), II — 105 sowie auf G. E. Ham, « Vinyl Polymerisation » Vol. 1, Part 1, M. Dekker, New York (1967) S. 25 ff.

Die Produkte eignen sich zur Erniedrigung des Stockpunktes von Lösungen von bei Raumtemperatur festen Paraffinen in Kohlenwasserstoffen. Dabei zeigen sie den Vorteil, daß sie weder gegen Scherbeanspruchung noch gegen Hydrolyse bei Langzeitlagerung in Gegenwart von Wasser anfällig sind. Sie sind somit besonders geeignet, paraffinreichen Rohölen zur Verbesserung der Pumpfähigkeit bei tiefen Temperaturen und zur Verhinderung von Ablagerungen in Leitungen und Tanks zugesetzt werden. Je nach Paraffingehalt der Rohöle beträgt die zuzusetzende Menge zwischen 20 und 400 ppm. In den meisten Fällen wird eine für die Praxis ausreichende Stockpunkterniedrigung mit Mengen zwischen 40 und 200 ppm erreicht.

## Beispiele

1. Herstellung langkettiger Methacrylsäure- und Acrylsäureester.

Ausgegangen wurde von folgenden Fettalkoholen :

3

Fettalkohol 1 (Behenylalkohol)
$C_{18}$ : 5-15 Gew.-%
$C_{20}$ : 10-20 Gew.-%
$C_{22}$ : ca. 70 Gew.-%
$C_{24}$ : ca. 1 Gew.-%
Fettalkohol 2 (hydrierter Erucaalkohol) Jodzahl ca. 2
$C_{18}$ : 40-45 Gew.-%
$C_{20}$ : 8-20 Gew.-%
$C_{22}$ : 40-45 Gew.-%
$C_{24}$ : ca. 1 Gew.-%.

Bei 60 °C wurde eine ca. 70 Gew.%ige Lösung der Fettalkohole in Toluol hergestellt und mit 1,5 mol Methacrylsäure bzw. Acrylsäure pro mol Fettalkohol versetzt. Sodann wurden 2 Gew.-% Paratoluolsulfonsäure, bezogen auf Fettalkohol zugegeben und mit 1 Gew.-% Hydrochinon als Polymerisationsinhibitor versetzt. Die aceotrope Veresterung fand bei 95-105 °C während 6 Stunden statt. Nachdem die theoretische Wassermenge abgeschieden worden war, wurde zur Entfernung des Hydrochinons mit wäßriger Hydrogencarbonatlösung ausgeschüttelt. Sodann wurde Natriumsulfat als Trockenmittel zugesetzt, abfiltriert und das Lösungsmittel durch Destillation unter vermindertem Druck entfernt. Die Reaktionsprodukte zeigten die folgenden Esterzahlen :
Acrylsäureester aus Alkohol 1 (A1) 152
Acrylsäureester aus Alkohol 2 (A2) 158
Methacrylsäureester aus Alkohol 1 (M1) 146
Methacrylsäureester aus Alkohol 2 (M2) 152

2. Herstellung der Copolymeren :

In einem Reaktionsgefäß wurden 1/4 mol der Ester A1, A2, M1 oder M2 sowie 1/16 mol Methacrylamid oder Dimethylaminopropylmethacrylamid in 80 g Toluol gelöst und vorgelegt. Es wurde mit Stickstoff gespült, auf eine Temperatur um 100 °C erwärmt. Zur Aufrechterhaltung der Polymerisation wurden 0,005 mol Azoisobutyronitril, gelöst in 15 g Butanon in 8 Portionen im Abstand von jeweils 15 Minuten zugetropft.

Anschließend ließ man das Reaktionsgemisch 2 Stunden bei ca. 100 °C nachreagieren. Die entstandene Lösung des Copolymerisats war gut schüttbar und konnte als solche zur Stockpunkterniedrigung von Rohölen eingesetzt werden. Sie spezifischen Viskositäten der Copolymerisate sind in Tabelle 1 aufgeführt.

Tabelle 1

| Copolymer Nr. | (Meth)Acryl- säureester | Comonomer | Molver- hältnis | $\eta_{sp}$ 1 %ig in Toluol bei 20 °C) |
|---|---|---|---|---|
| 1 | M2 | Methacrylamid | 4 : 1 | 0,25 |
| 2 | M2 | Methacrylamid | 6 : 1 | 0,25 |
| 3 | M2 | N-(3-Dimethylamino-propyl)methacryl-amid | 4 : 1 | 0,35 |
| 4 | A2 | N-(3-Dimethylamino-propyl)methacryl-amid | 4 : 1 | 0,10 |
| 5 | A1 | N-(3-Dimethylamino-propyl)methacryl-amid | 4 : 1 | 0,13 |

Prüfung der Copolymeren auf ihre fließverbessernde Wirkung

Eine Lösung aus 90 Gew.-% Heizöl EL und 10 Gew.-% Paraffin mit einem Erstarrungspunkt von 46-48 °C wurde mit der angegebenen Menge des jeweiligen Copolymeren versetzt. 15 ml dieser Lösung wurden in ein verschließbares Reagenzglas (Ø = 1,3 cm, h = 15,0 cm) gefüllt und das Reagenzglas in ein Rotationsgerät « Heidolph Reax 2 » eingespannt. Unter Rotation des Reagenzglases um seine Querachse (10 Upm) wird die Probe 2 h bei — 25 °C abgekühlt. Anschließend läßt man die Probe unter Rotation auftauen und bestimmt die Temperatur, bei der der gesamte Reagenzglasinhalt fließt. Es werden mindestens 2 Messungen vorgenommen, deren Meßwerte sich nicht um mehr als 2 °C unterscheiden sollten. Die erhaltenen Meßergebnisse sind in Tabelle 2 zusammengefaßt, wobei die Einsatzkonzentration und die erzielte Stockpunkterniedrigung im Vergleich zur unbehandelten Heizöl-Paraffin-Mischung angegeben sind.

Tabelle 2

| Copolymer Nr. | Einsatz- konzentration ppm | Stockpunkt- erniedrigung °C |
|---|---|---|
| 1 | 100 | 21,5 |
| 2 | 100 | 14,5 |
| 3 | 100 | 17 |
| 4 | 100 | 12 |
| 5 | 100 | 7 |

Es wurden weitere Copolymere mit M2 hergestellt, deren Zusammensetzung, spezifische Viskosität und Wirkung als Fließverbesserer aus der Tabelle ersichtlich ist.

(Siehe Tabelle Seite 6 f.)

| Copolymer | Comonomer | Molverhältnis M 2 : Comonomer | $\eta\,sp$ [3] (1 %ig in Toluol, 20°C) | Stockpunkt-[1] erniedrigung (°C) |
|---|---|---|---|---|
| 6 | Acrylamid [2] | 4 : 1 | 0,14 | 13 |
| 7 | Acrylamid [2] | 6 : 1 | 0,13 | 13 |
| 8 | Acrylamid [2] | 8 : 1 | 0,13 | 14 |
| 9 | N-Benzylmethacryl-amid | 3 : 1 | 0,16 | 11 |
| 10 | N-Benzylmethacryl-amid | 4 : 1 | 0,22 | 12 |
| 11 | N-Methylmethacryl-amid | 3 : 1 | 0,18 | 13 |
| 12 | N-Methylmethacryl-amid | 4 : 1 | 0,14 | 13 |
| 13 | N-Decylacrylamid | 3 : 1 | 0,18 | 14 |
| 14 | N-Decylacrylamid | 4 : 1 | 0,21 | 12 |

...

[1] Die Stockpunkterniedrigung wurde an einem Gemisch aus 85 Gew.-% Benzin (Kp 145-200 °C) und 15 Gew.-% Paraffin (EP 46-48 °C) bei 100 ppm Zusatz des Fließverbesserers entsprechend der allgemeinen Vorschrift bestimmt.

[2] Abweichend von der allgemeinen Vorschrift wurden die Copolymeren 6-8 in Methylisobutylketon hergestellt. Das Lösungsmittel wurde nach beendeter Polymerisation abgezogen und durch Toluol ersetzt.

[3] Gemessen im Ostwald Viskosimeter.

**Patentansprüche**

1. Verwendung von Copolymeren aus
— Estern der Acryl- und/oder Methacrylsäure mit 16-24 C-Atomen einerseits sowie
— Acryl- und/oder Methacrylamiden, die gewünschtenfalls am N-Atom eine lineare Alkylgruppe mit 1-18 C-Atomen, eine Benzylgruppe oder eine Dimethylamino- oder Diethylaminogruppe, die über einen $C_3$-$C_6$-Rest gebunden ist, aufweisen, andererseits
wobei das Molverhältnis zu Ester : Amid zwischen 2 : 1 und 10 : 1 liegt, als Stockpunkterniedriger für Lösungen fester Paraffine in Kohlenwasserstoffen.

2. Ausgestaltung nach Anspruch 1, dadurch gekennzeichnet, daß man Copolymere mit einem Molverhältnis der Ester zu den Amiden von 3 : 1 bis 6 : 1 einsetzt.

3. Ausgestaltung nach den Ansprüchen 1 und 2, dadurch gekennzeichnet, daß man Copolymere einsetzt, die als Acryl- bzw. Methacrylester Ester der Säuren mit aus natürlichen Rohstoffen hergestellten Fettalkoholen und insbesondere deren Gemischen enthalten.

4. Ausgestaltung nach den Ansprüchen 1-5, dadurch gekennzeichnet, daß man Copolymere mit einer spezifischen Viskosität zwischen 0,05 und 0,5, gemessen 1 %ig in Toluol bei 20 °C, einsetzt.

5. Ausgestaltung nach den Ansprüchen 1-4, dadurch gekennzeichnet, daß die Copolymeren zur Stockpunkterniedrigung von Mineralölen, insbesondere Rohölen eingesetzt werden.

6. Ausgestaltung nach den Ansprüchen 1-5, dadurch gekennzeichnet, daß die Copolymeren in Mengen von 20-400 ppm, insbesondere in Mengen von 40-200 ppm eingesetzt werden.

**Claims**

1. The use of copolymers of
— esters of acrylic and/or methacrylic acid containing from 16 to 24 carbon atoms on the one hand and
— acryl and/or methacrylamides which, if desired, contain at the nitrogen atom a linear $C_1$-$C_{18}$ alkyl group, a benzyl group or a dimethylamino or diethylamino group attached by a $C_3$-$C_6$ radical on the other hand,
the molar ratio of ester to amide being from 2 : 1 to 10 : 1, as pour point depressants for solutions of solid paraffins in hydrocarbons.

2. The use claimed in Claim 1, characterized in that copolymers in which the molar ratio of the esters to the amides is from 3 : 1 to 6 : 1 are used.

3. The use claimed in Claims 1 and 2, characterized in that copolymers containing esters of acid with fatty alcohols prepared from natural raw materials and more especially esters thereof as the acrylic or methacrylic esters are used.

4. The use claimed in Claims 1 to 5, characterized in that copolymers having a specific viscosity of from 0.05 to 0.5, as measured on a 1 % solution in toluene at 20 °C, are used.

5. The use claimed in Claims 1 to 4, characterized in that the copolymers are used as pour point depressants in mineral oils, more especially crude oils.

6. The use claimed in claims 1 to 5, characterized in that the copolymers are used in quantities of from 20 to 400 ppm and more especially in quantities of from 40 to 200 ppm.

**Revendications**

1. Utilisation de copolymères des :
— esters des acides acryliques et/ou métacryliques à 16 à 24 atomes de carbone, d'une part, ainsi que des
— amides acryliques et/ou méthacryliques, qui présentent éventuellement, sur l'atome N, un groupe alcoyl linéaire à 1 à 18 atomes de carbone, un groupe benzyle, ou un groupe diméthylamino ou diéthylamino, qui est relié à un reste en $C_2$ à $C_6$, d'autre part,
le rapport moléculaire entre l'ester et l'amide se situant entre 2 : 1 et 10 : 1, comme agent abaissant le point d'écoulement de solutions de paraffine dans des hydrocarbures.

2. Formulation suivant la revendication 1, caractérisée en ce que l'on met en œuvre des copolymères avec un rapport molaire ester : amide de 3 : 1 à 6 : 1.

3. Formulation suivant l'une des revendications 1 et 2, caractérisée en ce que l'on met en œuvre des copolymères qui contiennent, comme esters acrylique ou métacrylique, des acides avec des alcools gras fabriqués avec des matières premières naturelles et en particulier des mélanges de ces produits.

4. Formulation suivant les revendications 1 à 3, caractérisée en ce que l'on utilise des copolymères ayant une viscosité spécifique entre 0,05 et 0,5 mesurée à 1 % dans le toluène à 20 °C.

5. Formulation suivant les revendications 1 à 4, caractérisée en ce que les copolymères sont mis en œuvre pour abaisser le point d'écoulement des huiles minérales, en particulier des huiles brutes.

6. Formulation suivant les revendications 1 à 5, caractérisée en ce que les copolymères sont utilisés dans des proportions de 20 à 400 ppm., en particulier dans la proportion de 40 à 200 ppm.